# EUROPEAN PATENT SPECIFICATION

(11) **EP 0 951 603 B1**
(45) Date of publication and mention of the grant of the patent: **14.08.2002**
(21) Application number: 97909935.5
(22) Date of filing: 03.10.1997
(51) Int. Cl.: D21H 27/38, B32B 29/00, D21H 13/08

(54) **LAYERED TISSUE HAVING IMPROVED FUNCTIONAL PROPERTIES**
LAGENFÖRMIGES TISSUEPAPIER MIT VERBESSERTEN FUNKTIONSEIGENSCHAFTEN
TISSU DISPOSE EN COUCHES ET POSSEDANT DE MEILLEURES PROPRIETES FONCTIONNELLES

(30) Priority: 24.10.1996 US 738949
(43) Date of publication of application: 27.10.1999
(73) Proprietor: THE PROCTER & GAMBLE COMPANY, Cincinnati, Ohio 45202 (US)
(72) Inventor: PHAN, Dean, Van, West Chester, OH 45069 (US); TROKHAN, Paul, Dennis, Hamilton, OH 45013 (US)
(74) Representative: Canonici, Jean-Jacques
(86) International application number: US9717796
(87) International publication number: WO9817864

(56) References cited:
- EP-A- 0 531 112
- WO-A-95/26441
- US-A- 1 826 557
- US-A- 3 994 771
- US-A- 4 913 773
- US-A- 5 087 324

## Description

### FIELD OF THE INVENTION

The present invention relates to tissue paper, and more particularly to tissue paper having plural layers.

### BACKGROUND OF THE INVENTION

Tissue paper is a staple of everyday life. Tissue paper is frequently used for bath tissue, facial tissue, and for paper towels. Tissue paper is typically cellulosic and fibrous, the fibers having been prepared from various types of pulping processes and various species of deciduous and coniferous woods. Recycled and synthetic fibers may also be used.

Tissue paper needs to have properties which meet three primary criteria in order to be consumer acceptable: bulk which encompasses the inversely related properties of caliper and density, strength and softness. Typically softness and strength have been optimized by layering the fibers comprising the paper. Bulk is obtained in other manners, such as molding a wet embryonic web into a photopolymer belt, according to commonly assigned US-A-4,637,859, issued January 20, 1987 to Trokhan.

The art has used both homogeneous blends of such cellulose fibers and stratified layers of such fibers in papermaking. Particularly, separation of the various types of fibers into various layers during papermaking has been attempted several times in the prior art.

As used herein, the term "layer" refers to a stratum of fibers formed in the wet end of a papermaking machine and which is different from an adjacent stratum. The difference may include the preponderance of fiber species. The difference may also include the chemical treatment, pulping or any other factors which affect the properties of that stratum of fibers.

The layer is typically deposited onto a forming wire. Particularly, a layer refers to an individual stratum of fibers, typically superimposed on one or more different strata, and deposited onto a common forming wire with the other strata. Deposition is accomplished by having each layer deposited from a separate channel of a split headbox. Alternatively, the layers can be deposited onto a common forming wire from separate headboxes.

Another way to determine if paper is layered is to analyze various regions of the paper throughout its thickness. Preferably the analysis includes the regions disposed on the opposed faces of the paper and several regions between the opposed faces of the paper.

Different regions of the paper throughout its thickness may be accessed for analysis by removing fibers from the paper, starting at either or both faces with adhesive tape, as is known in the art. The fibers adhering to the tape are then analyzed for species content, chemical treatment, pulping, or any other factor which may affect the properties of the fiber.

If 1) at least 25 percent of the fibers at a given region of the paper are different than the preponderance of fibers at another region of the paper having a different position within the thickness of the paper, the paper is considered to be layered, or 2) the paper is made as described above using a split headbox or more than one headbox which discharges onto a common forming wire, the paper is considered to be layered.

In contrast, a "ply" refers to a single sheet, having one or more layers, as taken off of the forming element. A ply may later be combined with other plies, embossed, etc., as desired.

US-A-2,881,669, issued April 14, 1959 to Thomas et al. discloses paper having three layers. The three layers comprise a central layer of short fibers and two outer layers of long fibers. This arrangement is said to improve strength and provide reduced ply separation. Papers subject to ply separation, i.e. having layers which shear during creping, are said to be disclosed in US-A-4,166,001, issued August 28, 1979 to Dunning et al. Dunning et al. discloses a three layered paper having a central layer of weakly bonded fibers between two outer layers of strongly bonded fibers. Ply separable paper is also disclosed in commonly assigned US-A-4,225,382 issued September 30, 1980 to Kearney et al. Kearney et al. teaches a three layered structure having two layers of well bonded fibers separated by an interior layer of short fibers.

Commonly assigned US-A-3,994,771, issued November 30, 1976 to Morgan, Jr. et al. extends the concept of layered paper to through air drying.

EP-A-0 531 112, published March 10, 1993, in the name of Jujo discloses a three layer toilet paper. The intermediate layer is about one hundred percent wood pulp. The outer layers comprise wood and rayon pulps mixed in a weight ratio of 40-80:60-20. This arrangement is said to provide a strong, absorbent toilet paper which is also water dispersible.

US-A-5,087,324, issued February 11, 1992 to Awofeso et al. discloses a two-ply, two-layer paper towel having two outer layers and two inner layers. The two outer layers comprise blends of Kraft softwood and Kraft hardwood. The two inner layers comprise high bulking fibers or chemi-thermomechanical pulp.

Typically the prior art has used two-layer paper, joined together in a two-ply laminate. However, a two-layer paper, even having two plies, still does not have the degrees of freedom necessary to optimize bulk, softness and strength. For through air dried paper, -two ply production economics are less attractive than single ply production economics.

The prior art also teaches a single ply, three layer paper. The two outer layers provide softness. The inner layer provides strength.

None of these prior art attempts have overcome the problem of increasing caliper, while maintaining adequate strength. Typically, as the caliper of the paper increases, density decreases. This decrease in density, unfortunately, causes a loss in tensile strength which is not overcome by the prior art attempts at layering. In addition to overcoming the tradeoff between caliper and tensile strength, there still must be a consumer-perceived tactile softness in the layered paper.

Accordingly, it is an object of this invention to provide a layered tissue which has both relatively high caliper and relatively high tensile strength. It is further an object of this invention to provide a paper which provides a soft tactile sensation to the user.

### SUMMARY OF THE INVENTION

The present invention as described in claim 1 comprises a layered tissue paper. The paper has at least one outer layer comprising relatively short papermaking fibers. The outer layer provides a soft tactile sensation to the user. The layered paper further comprises at least one inner layer having relatively long papermaking fibers. The relatively long fibers impart strength to the paper. The paper further comprises at least one inner layer having low density high bulking fibers. The low density high bulking fibers increase the bulk of the paper. Each of these layers is superimposed in face-to-face relationship with at least one other layer, whereby the outer layer is exposed to the user.

In a preferred embodiment, the paper may comprise five layers, two outer layers of relatively short papermaking fibers, the outer layers being exposed to and providing a soft tactile sensation to the user. The paper may further comprise two intermediate layers of relatively long papermaking fibers, the intermediate layers being juxtaposed with the outer layers. The paper of the preferred embodiment may further comprise a central layer of low density high bulking fibers, the central layer being juxtaposed with and separating the intermediate layers.

### BRIEF DESCRIPTION OF THE DRAWINGS

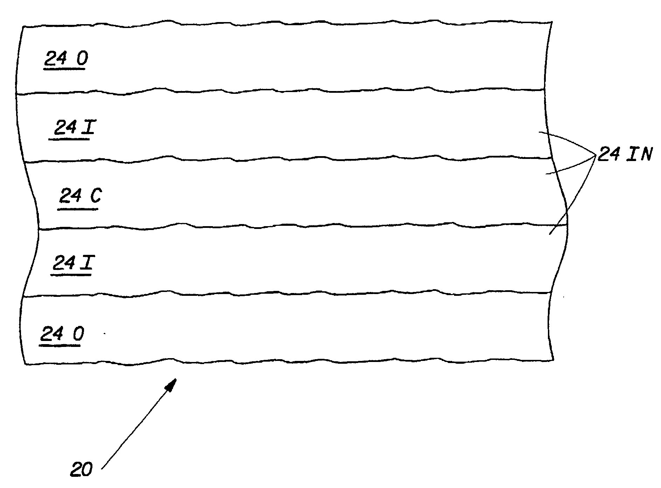

Figure 1 is a fragmentary sectional view of paper made according to the present invention and having five layers.

### DETAILED DESCRIPTION OF THE INVENTION

The present invention comprises a cellulosic fibrous paper 20 having multiple layers. As used herein, the term "layer" refers to an embryonic web supplied wet from a headbox and superimposed upon one or more other embryonic webs which are supplied wet from a headbox. The embryonic webs making up an individual layer may be supplied from different headboxes, or from a common headbox split by leaves. A suitable split headbox is available from the Valmet Company of Karlstad, Sweden or from the Beloit Company of Rockton, Illinois, as a STRATA-FLO type headbox. The different layers may have the same or different consistencies and same or different fiber mass or flow rates within the split headbox.

Suitable processes for layering according to the present invention are disclosed in commonly assigned US-A-3,994,771, issued November 30, 1976 to Morgan, Jr. et al.; 4,225,382, issued September 30, 1980 to Kearney et al.; and 4,300,981, issued November 17, 1981 to Carstens the disclosures of which patents show suitable layering processes.

Referring to Figure 1, a paper 20 according to the present invention comprises a plurality of layers. In a preferred embodiment, the paper 20 may comprise five layers, although embodiments having more or less layers are suitable for the present invention.

One or more of the layers may comprise cellulosic fibers, so that the paper 20 is a macroscopically monoplanar cellulosic fibrous structure. Cellulosic fibers and cellulosic fibrous structures are fully described and defined in commonly assigned US-A-5,443,691, issued August 22, 1995 to Phan et al.. Additionally, one or more layers may comprise synthetic fibers, as also described in the aforementioned '691 patent issued to Phan et al.

The paper 20 of Figure 1 has five layers: two outer layers 240, two intermediate layers 24I, and a central layer 24C. The intermediate and central layers are collectively referred to as inner layers 24IN. Each layer is disposed in face-to-face relationship with one or more of the other layers and joined thereto at a non-stepwise interface. Each layer has two opposed surfaces which define this interface. The layers are referred to as "inwardly facing" and "outwardly facing" which, respectively refer to orientations towards the central plane of the paper 20 and towards the exposed surface of the paper 20, respectively.

As noted above, the paper 20 shown in Figure 1 has two outer layers 240. Each outer layer 240 has an outwardly facing surface and an inwardly facing surface. The outwardly facing surfaces of the outer layers are exposed to the user and are primarily responsible for the tactile sensation of the paper 20 perceived by the user. The inwardly facing surfaces of the outer layers are juxtaposed with respective intermediate layers 241 at an interface.

Likewise, each intermediate layer 241 has an outwardly facing surface and an inwardly facing surface. These outwardly facing surfaces of the intermediate layers 24I are juxtaposed with the inwardly facing surfaces of the outer layers at the interface. The inwardly facing surfaces of the intermediate layers 241 are juxtaposed with the central layer 24C at yet another interface.

The central layer 24C separates the intermediate layers 241. The central layer 24C has two outwardly facing surfaces. The outwardly facing surfaces of the central layer 24C are juxtaposed with the respective inwardly facing surfaces of the intermediate layers 24I.

The two outer layers, in combination, may comprise about 20 to 80 percent, and preferably about fifty percent, by weight of the total fibers in the layered paper 20. The two intermediate layers 24I, in combination, may comprise about 10 to 50 percent, and preferably about thirty percent, by weight of the total fibers in the layered paper 20. The central layer 24C may comprise about 5 to 35 percent, and preferably about twenty percent, by weight of the total fibers in the layered paper 20.

Examining each of the layers in more detail, the two outer layers provide the functional benefit of imparting tactile softness to the user. Preferably the outer layers 24O comprise relatively short hardwood fibers. Hardwood fibers are preferred for the outer layers 24O because they generally exhibit lesser bonding to other fibers. As noted in the aforementioned U.S. patent 4,300,981 issued to Carstens, this yields free fiber ends which are upstanding from the outer layer 24O and provide a soft, velutinous tactile sensation to the user. Preferably the fibers in the outer layers 24O have fiber lengths of less than about 1.5 mm.

The outer layers 24O may comprise Eucalyptus fibers, such as fibers available from the Aracruz Company of Rio de Janeiro, Brazil. If it is desired to use less than one hundred percent Eucalyptus fibers in the outer layers 24O, a blend of Eucalyptus, hardwood Kraft and hardwood sulfite fibers may be utilized.

To further increase the soft tactile sensation of the outer layers, chemical softeners may be added to the paper 20 during papermaking. Suitable chemical softeners may be added according to the teachings of commonly assigned US-A-5,217,576, issued June 8, 1993 to Phan and 5,262,007, issued November 16, 1993 to Phan et al.. Redibond 5320, available from the National Starch and Chemical Corporation of Bridgewater, New Jersey may be used in the outer layer 24O to provide additional chemical bonding in the hardwood of the outer layer 24O and thereby reduce lint in the resulting paper 20.

The two intermediate layers 24I provide the functional benefit of imparting strength to the paper 20. Since any tensile forces applied within the X-Y plane of the paper 20 act upon all of the layers in parallel, the layers providing the strength may be effectively disposed at any position internal to the outer layers, which impart the soft tactile sensation to the user.

Softwood fibers are preferred for the intermediate layers 24I because they generally exhibit greater bonding to other fibers, which bonding improves strength. Preferably the fibers in the intermediate layers 24I have fiber lengths of about 2.5 mm or greater.

The intermediate layers 241 which provide the strength may be made of softwood, preferably Northern Softwood Kraft (NSK) as is commonly available from the Weyerhaeuser Company of Tacoma, Washington under the name Grand Prairie softwood Kraft. If it is not desired to use one hundred percent NSK in the strength carrying layers, a blend of NSK and low cost fibers or NSK and recycled fibers may be utilized in this layer. However, preferably such a blend comprises at least about 50 percent NSK.

If desired, dry strength binders, wet strength binders, temporary wet strength binders, permanent wet strength binders, and other bonding agents redispersible or cross-linked insoluble such as latexes may be added to the intermediate layers 24I. Such bonding agents are provided by Hercules Inc., of Wilmington, Delaware, under the tradename Kymene, from Cytec under the name Parez 750, and National Starch under the name Cobond.

The central layer 24C comprises low density high bulking fibers. Low density high bulking fibers are those which decrease density and increase caliper over a like quantity of conventional hardwood or softwood fibers.

Four types of low density bulking fibers are suitable for use with the present invention: 1) weakly bonded fibers, 2) debonded fibers 3) curled fibers, and 4) fibers combined with fillers to increase the volume.

Suitable weakly bonded fibers may be synthetic. Suitable synthetic fibers for the central layer 24C include nylon, polyester, cellulose acetate, and preferably rayon. Rayon is generally preferred because it is a synthetic cellulosic fiber and is highly compatible with the cellulosic fibers recommended for the other layers. Suitable rayon fibers are available from Courtaulds Fibers Inc. of Axis, AL, as Tencel type fibers. Another preferred weakly bonded fiber is cellulose acetate fibers. Cellulose acetate fibers are preferred because they are also synthetic cellulosic fibers and inhibit bonds from forming between adjacent cellulosic fibers. Suitable cellulose acetate fibers are available from the Hoescht Cellanese Inc. of Rock Hill, SC.

The second embodiment utilizes debonded fibers in the central layer 24C. Fibers may be chemically debonded from one another, thereby allowing them to easily separate, and thereby generate bulk. Debonded fibers may separate either during papermaking, or during creping.

Suitable debonding agents include quaternary ammonium compounds. Suitable quaternary ammonium compounds are found in commonly assigned US-A-5,240,562 issued to Phan et al.. Other suitable debonding agents include tertiary amines and other surfactants as are well known in the art.

The third embodiment utilizes curled fibers in the central layer 24C. Preferred curled fibers include cross-linked cellulosic fibers. It is preferred that the cross-linked cellulosic fibers be made of a hardwood such as Eucalyptus. Shorter length hardwood fibers, even when curled, have the advantages of being more easily formed and moldable during papermaking.

Suitable cross-linked cellulosic fibers may be made according to commonly assigned US-A-5,183,707, issued February 2, 1993 to Herron et al. and 5,190,563, issued March 2, 1993 to Herron et al.. Alternatively, the curled fibers may not be cross-linked. Curled fibers which are not cross-linked may be made by flash drying, dry fiberizing, and wet high consistency curling. Suitable methods for preparing curled fibers are described in GB-A-2 279 372, filed June 23, 1994 by Farrington, Jr., et al..

In a fourth embodiment, the fibers in the central layer 24C may be combined with fillers which increase the volume of the central layer 24C, and hence the entire paper 20. Such fillers inhibit bonding forming between adjacent cellulosic fibers and additionally increase the volume of such a layer.

Preferably the filler is non-cellulosic. More preferably, the filler is particulate. Suitable non-cellulosic particulate fillers include clay, calcium carbonate, titanium dioxide, talc, aluminum silicate, calcium silicate, alumina trihydrate, activated carbon, pearl starch, calcium sulfate, glass microspheres, diatomaceous earth, and mixtures thereof. The non-cellulosic particulate filler may comprise from about 8 percent to about 20 percent by weight of the tissue paper 20.

In an alternative embodiment, it may be desired to increase the bulk of the layered paper 20 even if there is a tradeoff in the wet strength of the paper 20. In such an embodiment according to the present invention however, both the bulk and strength will be improved over that obtained by the corresponding prior art.

In such an arrangement, a layered paper 20 may be made having, again, two outer layers 24O of fibers which provide a soft tactile sensation to the user. However, the two intermediate layers 241 may each be made of the low density bulking fibers. Finally, the central layer 24C which provides the strength for the layered paper 20 may be made of longer fibers which provide relatively greater bonding.

In an alternative embodiment, a four layer paper 20 may be provided. The four layer structure can have two outer layers 24O of relatively short fibers, such as eucalyptus. Such a paper 20 may further have two intermediate layers 24IN: one inner layer 24I of bulking fibers and one inner layer 241 of longer, preferably softwood, fibers for strength.

Alternatively, a paper 20 may be made having only one outer layer 24O with relatively short fibers, and intermediate layers 24IN as set forth above. Such a paper 20 may be combined with another such paper 20 in a laminate to form a two ply paper 20 having both outwardly facing surfaces comprise relatively short papermaking fibers which impart softness to the user.

It will be apparent that the paper 20 according to the present invention may either be through air dried or conventionally dried with press felts. If the paper 20 is through air dried, it may be made on clothing woven on a Jacquard loom, as disclosed, for example, in EP-A-0 677 612, published October 18, 1995 in the names of Wendt et al. Furthermore, the paper 20 according to the present invention may be creped as is known in the art or may be uncreped. Also, the paper 20 may be micro-contracted as, illustrated in the aforementioned application published in the names of Wendt et al., or need not be micro-contracted.

### REFERENCE NUMERALS

- 20: paper
- 24O: outer layer
- 24I: intermediate layer(s)
- 24C: central layer
- 24IN: inner layer(s)

## Claims

1. A layered tissue paper comprising:
at least one outer layer comprising relatively short papermaking fibers, whereby said at least one outer layer provides a soft tactile sensation to the user;
at least one first inner layer comprising relatively long papermaking fibers, whereby said fibers impart strength to the paper; and
at least one second inner layer comprising low density, high bulking fibers, wherein said fibers increase the bulk of the paper, each of said layers being superimposed in face-to-face relationship with at least one other layer, whereby that said outer layer is exposed to a user.

2. A paper according to Claim 1 wherein said at least one first inner layer comprises two intermediate layers, one said inner layer juxtaposed with said outer layer, and one said inner layer juxtaposed with said second inner layer.

3. A paper according to Claim 2 wherein said second inner layer comprises a central layer juxtaposed with and separating said intermediate layers.

4. A paper according to Claim 1, comprising four layers, two outer layers of relatively short papermaking fibers, whereby said outer layers are exposed to and provide a soft tactile sensation to the user, a first inner layer of relatively long papermaking fibers, said relatively long papermaking fibers imparting strength to said paper, said first inner layer being juxtaposed with one of said outer layers, a second inner layer of low density, high bulking fibers, said second inner layer being juxtaposed with said first inner layer and the other of said outer layers, whereby both said inner layers are between both said outer layers.

5. A paper according to Claim 1, comprising five layers, two outer layers or relatively short papermaking fibers, whereby said outer layers are exposed to and provide a soft tactile sensation to the user, two intermediate layers of relatively long papermaking fibers, said intermediate layers being juxtaposed with said outer layers, whereby said long fibers impart strength to the paper, and a central layer of low density, high bulking fibers, said central layer being juxtaposed with and separating, said intermediate layers.

6. A paper according to Claims 3 and 5 wherein said central layer comprises weakly bonded fibers, and preferably wherein said weakly bonded fibers are synthetic fibers, and more preferably wherein said synthetic fibers comprise cellulose acetate.

7. A paper according to Claims 3 and 5 wherein said central layer comprises debonded fibers and a debonding agent.

8. A paper according to Claims 1, 2, 3, and 4 wherein said second inner layer further comprises a non-cellulosic particulate filler, and preferably said non-cellulosic particulate filler comprises from about 8 percent to about 20 percent by weight of said paper, and more preferably said particulate filler is selected from the group consisting of clay, calcium carbonate, and titanium dioxide.

9. A paper according to Claim 8 wherein said central layer comprises curled fibers, and preferably said curled fibers are cross-linked cellulose fibers, and more preferably said cross-linked cellulose fibers are made of hardwood fibers.

10. A paper according to Claims 1, 2, 3, 4, 5, 6, 7, 8, and 9 which is uncreped.

## Patentansprüche

1. Lagiges Tissuepapier mit:
wenigstens einer äußeren Lage mit relativ kurzen Papier machenden Fasern, wodurch die wenigstens eine äußere Lage dem Benutzer eine weiche taktile Empfindung verleiht;
wenigstens einer ersten inneren Lage mit relativ landen Papier machenden Fasern, wodurch die Fasern dem Papier Festigkeit verleihen; und
wenigstens einer zweiten inneren Lage mit geringer Dichte, stark bauschenden Fasern, wobei die Fasern das Volumen des Papiers steigern, wobei jede der Lagen in einer seitenweisen Beziehung mit wenigstens einer anderen Lage übereinander angeordnet sind, wodurch die äußere Lage einem Benutzer frei entgegen gerichtet ist.

2. Papier nach Anspruch 1, in welchem die wenigstens eine erste innere Lage zwei Zwischenlagen umfaßt, wobei eine der Innenlagen neben der äußeren Lage angeordnet ist und eine der Innenlagen neben der zweiten Innenlage angeordnet ist.

3. Papier nach Anspruch 2, in welchem die zweite Innenlage eine zentrale Lage aufweist, die neben den Zwischenlagen angeordnet ist und diese trennt.

4. Papier nach Anspruch 1, mit vier Lagen, zwei äußeren Lagen aus relativ kurzen Papier machenden Fasern, wodurch die äußeren Lagen einem Benutzer frei entgegen gerichtet sind und für eine weiche taktile Empfindung sorgen, einer ersten inneren Lage aus relativ langen Papier machenden Fasern, wobei die relativ langen Papier machenden Fasern dem Papier eine Festigkeit verleihen. wobei die erste innere Lage neben einer der äußeren Lagen angeordnet ist, einer zweiten inneren Lage von stark bauschenden Fasern geringer Dichte, wobei die zweite innere Lage neben der ersten inneren Lage und der anderen der äußeren Lagen angeordnet ist, wodurch die beiden Innenlagen zwischen den beiden äußeren Lagen liegen.

5. Papier nach Anspruch 1, mit fünf Lagen, zwei äußeren Lagen von relativ kurzen Papier machenden Fasern, wodurch die äußeren Lagen dem Benutzer frei entgegen gerichtet sind und für eine weiche taktile Empfindung sorgen, zwei Zwischenlagen aus relativ langen Papier machenden Fasern, wobei die Zwischenlagen neben den äußeren Lagen angeordnet sind, wodurch die langen Fasern dem Papier Festigkeit verleihen, und einer zentralen Lage aus stark bauschenden Fasern geringer Dichte, wobei die zentrale Lage neben den Zwischenlagen angeordnet ist, und diese trennt.

6. Papier nach den Ansprüchen 3 und 5, in welchem die zentrale Lage schwach gebundene Fasern aufweist und in welchem vorzugsweise die schwach gebundenen Fasern synthetische Fasern sind und bei welchem ganz bevorzugt die synthetischen Fasern Zelluloseacetat umfassen.

7. Papier nach den Ansprüchen 3 und 5, in welchem die zentrale Lage entbundene Fasern und ein Entbindungsmittel umfaßt.

8. Papier nach den Ansprüchen, 1, 2, 3 und 4, in welchem die zweite innere Lage ferner aufweist einen nicht zelluloseartigen, teilchenförmigen Füllstoff und vorzugsweise der nicht zelluloseartige, teilchenförmige Füllstoff von etwa 8 Gew.% bis etwa 20 Gew.% des Papiers umfaßt und ganz bevorzugt der teilchenförmige Füllstoff ausgewählt ist aus der Gruppe bestehend aus Ton, Kalziumcarbonat und Titandioxid.

9. Papier nach Anspruch 8, in welchem die zentrale Lage gekräuselte Fasern aufweist und vorzugsweise die gekräuselten Fasern vernetzte Zellulosefasern sind und ganz bevorzugt die vernetzten Zellulosefasern aus Hartholzfasern hergestellt sind.

10. Papier nach den Ansprüchen 1, 2, 3, 4, 5, 6 7, 8 und 9, welches ungekreppt ist.

## Revendications

1. Un papier tissu à couches comprenant :
au moins une couche extérieure comprenant des fibres papetières relativement courtes, ladite au moins une couche extérieure procurant un sensation tactile douce à l'utilisateur ;
au moins une première couche intérieure comprenant des fibres papetières relativement longues, lesdites fibres impartissant de la résistance au papier ; et
au moins une seconde couche intérieure comprenant des fibres de faible densité et à haut bouffant, lesdites fibres augmentant le bouffant du papier, chacune desdites couches étant superposée face-à-face avec au moins une autre couche, de telle sorte que ladite couche extérieure soit exposée à l'utilisateur.

2. Un papier selon la revendication 1, dans lequel ladite au moins première couche intérieure comprend deux couches intermédiaires, l'une desdites couches intérieures étant juxtaposée avec ladite couche extérieure, et l'une desdites couches intérieures étant juxtaposée avec la seconde couche intérieure.

3. Un papier selon la revendication 2, dans lequel ladite seconde couche comprend une couche centrale juxtaposée avec et séparant lesdites couches intermédiaires.

4. Un papier selon la revendication 1 comprenant deux couches extérieures de fibres papetières relativement courtes, lesdites couches extérieures étant exposées vers et procurant une sensation tactile douce à l'utilisateur, une première couche intérieure de fibres papetières relativement longues, lesdites fibres papetières relativement longues impartissant de la résistance audit papier, ladite première couche intérieure étant juxtaposée avec une desdites couches externes, une seconde couche intérieure de fibres de faible densité et de haut bouffant, ladite seconde couche étant juxtaposée avec ladite première couche intérieure et l'autre desdites couches extérieures, lesdites deux couches intérieures étant entre lesdites deux couches extérieures.

5. Un papier selon la revendication 1 comprenant cinq couches, deux couches extérieures de fibres papetières relativement courtes, lesdites couches exterieures étant exposées vers et procurant à l'utilisateur une sensation tactile douce, deux couches intermédiaires de fibres papetières relativement longues, lesdites couches intermédiaires étant juxtaposées avec lesdites couches extérieures, lesdites fibres longues impartissant de la résistance au papier et une couche centrale de fibres de faible densité et de haut bouffant, ladite couche centrale étant juxtaposée avec et séparant lesdites couches intermédiaires.

6. Un papier selon les revendications 3 et 5 dans lequel la couche centrale comprend des fibres faiblement liées et de préférence dans lequel les fibres faiblement liées sont des fibres synthétiques et plus préférentiellement dans lequel lesdites fibres synthétiques comprennent de l'acétate de cellulose.

7. Un papier selon les revendications 3 et 5 dans lequel la couche centrale comprend des fibres déliées et un agent déliant.

8. Un papier selon les revendications 1, 2, 3 et 4 dans lequel ladite seconde couche centrale comprend en outre une charge de particules non cellulosiques et de préférence ladite charge de particules non cellulosiques représente environ 8 pour-cent jusqu'à environ 20 pour-cent en poids dudit papier, et plus préférentiellement ladite charge de particules non cellulosiques est choisie dans le groupe constitué par l'argile, le carbonate de calcium et le dioxyde de titane.

9. Un papier selon la revendication 8 dans lequel la couche centrale comprend des fibres recourbées et de préférence lesdites fibres recourbées sont des fibres de cellulose réticulées et plus préférentiellement lesdites fibres de celluloses réticulées sont réalisées partir de fibres de bois dur.

10. Un papier selon les revendications 1, 2, 3, 4, 5, 6, 7, 8 et 9 qui est non crêpé.
